(19) Europäisches Patentamt / European Patent Office / Office européen des brevets

(11) **EP 3 763 522 B1**

(12) **EUROPEAN PATENT SPECIFICATION**

(45) Date of publication and mention of the grant of the patent:
**07.01.2026 Bulletin 2026/02**

(21) Application number: **20185015.3**

(22) Date of filing: **09.07.2020**

(51) International Patent Classification (IPC):
*B32B 7/06* (2019.01)  *B32B 27/08* (2006.01)
*B32B 27/30* (2006.01)  *B32B 27/32* (2006.01)
*B32B 27/34* (2006.01)  *B32B 27/36* (2006.01)
*B32B 7/12* (2006.01)

(52) Cooperative Patent Classification (CPC):
**B32B 7/06; B32B 7/12; B32B 27/08; B32B 27/30; B32B 27/302; B32B 27/306; B32B 27/32; B32B 27/34; B32B 27/36;** B32B 2250/02; B32B 2250/03; B32B 2250/05; B32B 2250/24; B32B 2307/514; B32B 2307/748;  (Cont.)

(54) **MULTILAYER RECLOSABLE FILM**

MEHRSCHICHTIGE WIEDERVERSCHLIESSBARE FOLIE

FILM REFERMABLE MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2019 EP 19185972**

(43) Date of publication of application:
**13.01.2021 Bulletin 2021/02**

(73) Proprietor: **Flexopack S.A.**
**194 00 Koropi (GR)**

(72) Inventor: **GINOSATIS, Dimitris**
**19400 Koropi Attica (GR)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
EP-A1- 2 902 461   WO-A1-2019/121119
US-A1- 2006 286 323   US-A1- 2008 152 850
US-A1- 2020 324 528

EP 3 763 522 B1

(52) Cooperative Patent Classification (CPC): (Cont.)
B32B 2405/00; B32B 2439/46; B32B 2439/70

## Description

In the plastic film area, well-known types of film are the so called "reclosable" or "resealable" films. Packs produced by said films can be reclosed after opening of the pack by applying force, e.g. manually by the hand of a consumer. This allows the consumer to reclose the pack after use and thus keep the stored content fresh for consumption at a later time.

A well-known technology for this kind of films is explained e.g. in AU 2011311413 B2. According to this technology, a coextruded adhesive is included in the structure as adjacent layer to the sealing layer. After opening of the seal, the sealing layer breaks and then the adjacent adhesive layer is able to reseal to itself or to the seal layer thus achieving resealability. This is very often implemented as part of a multilayer lidding film to be sealed to trays.

US 2006/286323 A1 discloses for example a multilayer film including an "A" monolayer of biaxially oriented polyester film and a "B" layer including multiple coextruded layers, such as an outer layer/tie/nylon blend/EVOH/nylon blend/tie/sealant layer. The "A" and "B" layers are dry bond adhesive laminated. US 2008/152850 A1 discloses a reclosable lap seal for a package. WO 2019/121119 A1 and US 2020/324528 A1 disclose a reclosable package comprising a multilayer film.

However, when the multilayer film does not seal to a rigid substrate (e.g. a tray) but to itself (e.g. in a bag formation or a pouch formation or a pouch formation produced by VFFS (vertical form film seal) or HFFS (horizontal form fill seal)), the above technology does not work as efficiently. The reason is that the above concept is formulated to produce a kind of delamination between sealing layer and adhesive layer. This delamination when done in both opposing ends of a seal of the same film (e.g. in the case of a bag) is aesthetically unappealing.

A further well-known packaging application is the VFFS (vertical form film seal) operation. In this application, a film is formulated as a bag after going around a metal collar. The packs produced are sealed at their top and bottom horizontally and also have a vertical sealing that might be fin or lap seal. A large number of every day packs are produced via this method.

A further well-known packaging application is the HFFS (horizontal form fill seal) operation. In this case the pack is produced horizontally after the film is formed around a metallic plough and then sealed usually with heated rollers. The pack in this case has a side seal and a bottom seal. Again, it is a very common packaging operation.

In certain packs produced by either method, a part of the sealing layer is coated with an adhesive "cold seal". This coating allows the packer to produce an adhesive seal under lower temperature conditions needed to produce acceptable heat seals for the uncoated sealing layer. However, this coating is never applied to the whole of the surface as the operation would suffer from too much stickiness and tackiness.

It is an object of the invention to provide a multilayer film that offers reclosability of the whole film surface (=total reclosability) versus state of the art films where the reclosability is limited to the seal area (as per prior art patent AU 2011311413 B2 and many others) or to the cold seal area. This allows the consumer to close the already opened pack at any point of the film surface (according to his own convenience), thus allowing easier handling of the reclosable pack by the consumer.

## FILM OF THE INVENTION

The multilayer film of the present invention preferably has a thickness less than 150 microns, more preferably less than 100 microns, even more preferably less than 50 microns.

The multilayer film of the invention comprises an outer layer and an adhesive layer, wherein the multilayer film comprises a first film comprising the outer layer and the adhesive layer, wherein the first film is non-oriented, and a second film, wherein the second film is oriented and the second film is laminated to the outer layer of the first film, and a portion from 5 to 99% per mass of the total multilayer film is oriented, wherein the outer layer comprises ethylene alpha olefin copolymer, and the adhesive layer comprises ethylene vinyl acetate copolymer where the vinyl acetate weight ratio is at least 20%.

The invention further relates to the use of the multilayer film; a method for producing a bag using a vertical form film seal or horizontal form fill seal process using the multilayer film, as well as a bag made from the multilayer film.

Further aspects of the invention are set out in the dependent claims.

Outside the scope of the invention said first film is oriented by methods like double bubble, triple bubble, monoaxial orientation (MDO) or tenter frame. In that case 100 mass% of the multilayer film are oriented.

In another preferred embodiment of the invention, the first film is not oriented but is produced e.g. by "hot blown film coextrusion" as well known in the art. In that case, the produced non-oriented first film is laminated, by adhesive or thermal lamination, to a second totally or partially oriented film. In said embodiment, the finally produced multilayer film comprises a non-oriented first film, laminated, to a second totally or partially oriented film, and the multilayer film has an oriented portion from 5 to 99% per mass, merepreferably 10-90% per mass, more preferably 20-80% per mass, most preferably 30-70 % per mass. The oriented portion is calculated by the following formula:

Mass of the second oriented film / (Mass of the (first) non-oriented film + mass of the (second) oriented film)*100.

Thus, considering the both embodiments described the present invention relates to a multilayer film comprising an outer layer and an adhesive layer, wherein the film has an oriented portion from 5 to 99% per mass of the total multilayer film, preferably 10-90% per mass, more preferably 20-80% per mass, most preferably 30-70 % per mass.

Definitions:

In this description the following definitions are used:

The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured in water according to ASTM 2732. For temperatures like 100 °C or more, glycerine is used as a reference liquid.

The term "total heat shrinkability" refers to the sum of heat shrinkability at the MD direction and heat shrinkability at the TD direction. In all cases, ASTM 2732 is used for measurement of shrinkabilities.

The term "multilayer" refers to a film comprising 2 or more layers.

The phrase "longitudinal direction" or "machine direction" herein abbreviated "MD" refers to a direction along the length of the film.

The phrase "transverse direction," herein abbreviated "TD" refers to a direction across the film, perpendicular to the machine direction.

The phrase "outer layer" refers to the film layer which comes in immediate contact with the outside environment (atmosphere). The outer layer in the present invention is a "release layer", i.e. a low- or non-adhesive antistick layer.

The phrase "inner layer" refers to the film layer that comes in direct contact with the product packed. The inner layer of the present invention is a sealing or adhesive layer.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein, the term "polyolefin" refers to any polymerized olefin, which can be linear, branched, cyclic, aliphatic, substituted or unsubstituted. More specifically, included in the term polyolefin are homopolymers of olefin, copolymers of olefin, copolymers of an olefin and a non-olefinic comonomer (such as ester) etc.

Specific examples include polyethylene homopolymer, polypropylene homopolymer, polybutene homopolymer, ethylene alpha olefin copolymer, propylene alpha olefin copolymer, butene alpha olefin copolymer, ionomer, ethylene ester copolymer etc.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra-low density polyethylene (ULDPE), metallocene catalysed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY® from DOW or Exact® from Exxon.

As used herein the phrase "styrene polymers" refers to styrene homopolymers such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40% per mol.

As used herein the phrase "ethylene vinyl acetate copolymer" or EVA refers to copolymers of ethylene and vinyl acetate.

As used herein the phrase "ethylene ester copolymer" includes any polymer made from ethylene and ester monomers. It is obvious that this term includes EVAs, EMAs and other polymers.

As used herein the term "oxygen barrier polymer" refers to polymers which have the property to limit the passage of oxygen through a film or a layer comprising the polymer. Common materials are EVOH, PVDC or polyamide.

As used herein, the term EVOH refers to saponified products of ethylene vinyl ester copolymers. The ethylene content is typically in the range of 25 to 50% per mol. All the later references to EVOH ethylene content will be in % per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized. An example of such material is Surlyn® from Dupont.

As used herein, the term "polypropylene" refers to polymers incorporating propylene structural units. Examples of these, are homo polypropylenes, random copolymers of propylene and ethylene, block copolymers of propylene and ethylene, copolymers or blends of propylene and rubber (such as blends of polypropylene and ethylene propylene rubber), propylene ethylene alpha olefin terpolymers and others.

These polymers may be isotactic, syndiotactic or atactic. Isotactic configuration is preferred.

As used herein the term "self-adhesive material" refers to materials that when produced into film form can be bonded to themselves by pressure only without the need to be heated. The bonding level which separates self-adhesive from non self-adhesive materials is 5 g/15 mm when the bonding has been done on a 100 x 1500 mm film piece with a pressure of 3 bar under 23 °C temperature and 50% relative humidity and with a contact time of 5 seconds. Values of 5 g/15 mm or more according to this test show that the material is self-adhesive whereas values of lower than 5 g/15 mm show the film being non self-adhesive.

As used herein the term "substantially non resilient material" refers to materials or material compounds comprising at least 40% per weight inorganics like calcium carbonate, titanium dioxide, wollastonite, mica, glass fibers, dolomite and the like. The rest percentage per weight can be polyethylene, polypropylene, styrene polymer or other thermoplastic material.

As used herein the term "tackifier" refers to low molecular weight materials used to increase the stickiness of the surface of an adhesive. Typical examples are rosins and their derivatives, terpenes and modified terpenes, hydrogenated hydrocarbon resins, C5 aliptatic resins, C9 aromatic resins, C5/C9 resins, terpene/phenol resins and the like.

All measurement methods mentioned herein are readily available for the skilled person. For example, they can be obtained from the American National Standards Institute at: www.webstore.ansi.org

As used herein the term "total reclosability" refers to a film property describing that the film is able to re-adhere at any point of the surface by applying pressure, e.g. by the hand of a user of the film.

All percentages are based on weight per weight ratio (weight-%), except when otherwise stated.

The grs/square meter is same as $g/m^2$. Both are expressing the weight to surface ratio.

Detailed description of layers of first film:

Inner layer (adhesive / sealing layer)

The inner layer comprises an adhesive material.

In a preferred embodiment, the weight of the inner layer is less than 60 $g/m^2$, more preferably less than 50 $g/m^2$.

According to the invention, the adhesive material comprises ethylene vinyl acetate copolymer where the vinyl acetate weight ratio is at least 20%, more preferably at least 25%, even more preferably at least 35%, even more preferably at least 40%.

Outside the scope of the invention, the adhesive material is a propylene ethylene copolymer where the ethylene content is at least 10% per weight.

Outside the scope of the invention, the adhesive material comprises an ethylene alpha olefin copolymer with density less than 0.9 $g/cm^3$, even more preferably less than 0.880 $g/m^3$. Preferred alpha olefins are butene, hexene or octene.

Outside the scope of the invention, the adhesive material comprises a maleic anhydrite grafted polyolefin. Examples are maleic anhydrite grafted ethylene vinyl acetate copolymer of linear low-density polyethylene.

Outside the scope of the invention, the adhesive material comprises styrene copolymers with styrene content less than 50% per weight. Typical examples are styrene butadiene styrene copolymers, styrene isoprene styrene copolymers, styrene ethylene butadiene copolymers and the like.

Outside the scope of the invention, the adhesive material comprises ethylene methyl acrylate copolymer with a methyl acrylate content of at least 20%.

Outside the scope of the invention, the adhesive material comprises ethylene butyl acrylate material with a butyl acrylate content of at least 15%.

Outside the scope of the invention, the adhesive material comprises poly-isobutylene polymer (PIB) or polybutene copolymer.

In a preferred embodiment the inner layer may comprise in addition to the adhesive material described above a non self-adhesive material such as polyolefins (preferably polyethylene homopolymers or copolymers) but not to the extent that the adhesive properties are compromised. It is preferable these non self-adhesive materials are contained in an amount of 5-15% per weight of the inner sealing layer.

In a further preferred version, the inner layer may further comprise tackifiers such as hydrocarbon resins, terpene resins, rosins and the like. Typical examples are Escorez® materials from Exxon.

In a further preferred version, the inner layer may further comprise materials such as "substantially non resilient materials" (SNR). See the above definition of this materials.

In a preferred version of the invention, the adhesive material in the inner layer is an extrudable material, meaning that it is melt processed by extrusion process.

Outer layer

Outside the scope of the invention, the phrase "outer layer" refers to the film layer that comes in direct contact with the environment.

Materials for the outer layer include polyolefins, such as low-density polyethylene, high density polyethylene, ethylene ester copolymer, ethylene alpha olefin copolymer and polypropylene. Ionomers and styrene copolymers are also possible. Ethylene alpha olefin copolymer is selected in the present invention.

Outside the scope of the invention, the outer layer comprises polypropylene polymers, polyamide or polyester.

In a preferred version the outer layer comprises at least one release agent that is a polymer or chemical substance that allows the surface tension of the outer side to decrease. The reason for this is to allow the easy unwinding of the reel when the inner and the outer side come in contact one to the other. Preferred release agents are organic lubricants (such as erucamide or oleamide) and silicone or siloxane-based lubricants.

In a preferred version the outer layer comprises at least 200 ppm of an amide-based lubricant. Typical amide-based lubricants are erucamide, oleamide, stearamide, oleyl palmitamide, behenamide and the like. In a more preferred version, the release layer comprises at least 500 ppm of an amide-based lubricant as of above.

Tie layers

In the tie layers typical adhesive resins like maleic anhydride modified polyolefins may be used. Typical examples are BYNEL® from Dupont and OREVAC® from Arkema.

In another preferred version the tie layers comprise low density polyethylene, linear low-density polyethylene, ethylene ester copolymers such as EVA, EMA or EBA and other polyolefin homopolymers, copolymers and terpolymers.

In another preferred version of the invention, polyamide could be used as tie layer. In that case a tie layer is needed between polyamide and polyolefins.

Abuse layers

In the abuse layers the use of polyolefin homopolymers and/or copolymers is preferred. Polyamide, polystyrene and polyester is also possible.

Barrier layer

The film preferably comprises oxygen barrier materials in case there is need for protection of the content from spoilage or rancidity. Preferable materials are EVOH, PVDC or polyamide.

General

The preferred production method for the film is the hot blown film method, which is well known in the art. Other methods like extrusion through flat cast die are also possible.

Additives well known in the art may be used in one or more layers of the present invention. Slip additives, antiblock additives, antifog, polymer processing aids may be used if pertinent.

In order to increase the mechanical properties the film may be crosslinked with one of the following methods: E-beam radiation, gamma radiation, moisture crosslinking using silane grafting compounds, peroxide crosslinking.

The film may be in tubular form or sealed at the edges or single sheet configuration. Centerfold configuration is also possible.

In a preferred embodiment of the invention produced (first) film is oriented by methods like double bubble, triple bubble, monoaxial orientation (MDO) or tenter frame.

In this case, there may be no further need to laminate the coextruded film to an second oriented film.

However, in another preferred embodiment of the invention, the first film is not oriented and is produced by the "hot blown film coextrusion" as well known in the art. In that case, the first film is laminated to a second totally or partially oriented film.

In a preferred embodiment of the invention said first film is oriented by methods like double bubble, triple bubble, monoaxial orientation (MDO) or tenter frame. In that case 100 mass% of the multilayer film are oriented.

In another preferred embodiment of the invention, the first film is not oriented but is produced e.g. by "hot blown film coextrusion" as well known in the art. In that case, the produced non-oriented first film is laminated, by adhesive or thermal lamination, to a second totally or partially oriented film, as described in the following.

Preferably, the first film is corona treated in line from the outer layer side, so that the film is able to be adhered during lamination to a second film.

Detailed description of the second film:

The second film is a totally or partially oriented film to be laminated to the coextruded non-oriented film 1.

The second film is preferably totally or partially oriented by either double bubble, triple bubble, tenter frame or monoaxial orientation as known in the art.

Preferably, the second film is totally or partially oriented polypropylene (mono or multilayer incorporating polypropylene homopolymers, copolymers and/or terpolymers), polyamide (potentially incorporating EVOH) or polyester.

The second film is laminated to the outer layer of the first film. Therefore, the sealing layer of the multilayer film of the invention is the sealing layer of the first film which comprises the self-adhesive extruded material.

In a preferable option, the second film is laminated to the first film using thermosetting lamination adhesives as well known in the art. Hot lamination (lamination where the bonding is achieved by temperature and pressure only) is possible but more technically challenging, given the non-sticky nature of the outer layer of first film.

EXAMPLES

FILM 1

Example A

A 5 layer film is produced in a commercial hot blown film line with the following recipe:

| | |
|---|---|
| Outer layer | 75% EAO1+ 15% SNR1+ 10% slip antiblock masterbatch |
| Tie layer | EAO1 |
| Abuse layer | EAO1 |
| Tie layer | EAO1 |
| Inner layer | Blend of 90% ethylene vinyl acetate copolymer comprising 70% vinyl acetate per weight + 10% low density polyethylene) |

See table 1

The thickness (in microns) of the structure is 10/3/1.5/3/8.5 starting from the inner and going to the outer layer.

TABLE 1

| Type | Description | Density g/cm$^3$ |
|---|---|---|
| EAO1 | Ethylene octene copolymer (LLDPE) | 0.92 |
| SNR1 | Calcium carbonate compound | 1.6 |

The slip antiblock masterbatch comprises 5% of erucamide, 10% silica and the balance LDPE.

The material was corona treated in line from the outer layer side, so that the film is able to be adhered during lamination to a second film.

Example B

A 5 layer film is produced in a commercial hot blown film line with the following recipe:

| | |
|---|---|
| Outer layer | 75% EAO1+ 15% SNR1+ 8% slip antiblock masterbatch + 2% PDMS masterbatch (polydimethyl siloxane slip masterbatch) |
| Tie layer | EAO1 |
| Abuse layer | EAO1 |
| Tie layer | EAO1 |
| Inner layer | A blend of 90% ethylene vinyl acetate copolymer comprising 70% vinyl acetate per weight + 10% calcium carbonate polyethylene compound |

The thickness of the layers was as per example A. So was corona treatment.

FILM 2

FILM2 is biaxially oriented polypropylene (BOPP) with a thickness of 30 microns.

LAMINATION PROCESS

FILM1 from Example A was laminated to FILM2 to produce FILM P according to the invention and FILM1 from Example B was laminated to FILM2 to produce FILM Q according to the invention.

The lamination was done on a Nordmecchanica laminator. Liofol 7732 adhesive (in blend with hardener 6084) from Henkel, as well known in the art, was used to bond the FILM1 (example A or example B) to FILM2.

The final films produced have a total thickness of 58 microns (30 microns BOPP (FILM2) + about 2 microns thermosetting adhesive + 26 microns of FILM1 (either Example A or Example B).

Thus, the following final films were produced:

FILM P: 30 microns BOPP + 2 microns thermosetting adhesive + 26 microns of FILM1 Example A
FILM Q: 30 microns BOPP + 2 microns thermosetting adhesive + 26 microns of FILM1 Example B

TESTING ON VFFS

Both films were tested on an Elkamas vertical form fill seal machine under the following conditions:

*temperature horizontal seal 90 °C
*temperature vertical seal 90 °C
*speed 25 packs per minute
*packed product 3 chocolates of 150 grams each.

The packs were 200 mm wide and 250 mm high.

During the packing process it was noted that the hot tack of the film (seal strength at melt condition) was enough to withstand the weight of the pack. The packaging process was done with no interruption.

It was further surprisingly noted that the film was not sticking to the metal collar and operation was smooth. This is unexpected as it would be expected that the film, due to the stickiness of the adhesive in the sealing layer, would stick to the collar and stop frequently the operation.

The horizontal seal strength of the packs was measured as per ASTM F88 using an Instron machine as well known in the art.

Film P had a seal strength of 210 grams per 15mm while film Q had a seal strength of 230 grams per 15mm.

It was further proven that packs made from both films P and Q were reclosable in the sense that after opening they could be resealed by appliance of pressure by human hand.

Prior art to the current invention is packaging using cold seal adhesive. This is quite common in e.g. packaging of chocolates. However, the cold seal adhesive is applied only in tiny stripes of the film and more specifically in the seal area. This does not offer total reclosability.

**EP 3 763 522 B1**

Claims

1. A multilayer film comprising an outer layer and an adhesive layer, wherein the multilayer film comprises a first film comprising the outer layer and the adhesive layer, wherein the first film is non-oriented, and a second film, wherein the second film is oriented and the second film is laminated to the outer layer of the first film, and a portion from 5 to 99% per mass of the total multilayer film is oriented, wherein the outer layer comprises ethylene alpha olefin copolymer, and the adhesive layer comprises ethylene vinyl acetate copolymer where the vinyl acetate weight ratio is at least 20%.

2. The multilayer film according to claim 1, wherein the adhesive layer comprises ethylene vinyl acetate copolymer where the vinyl acetate weight ratio is at least 25%, preferably at least 35%, more preferably at least 40%.

3. The multilayer film according to any of the preceding claims wherein the adhesive layer comprises in addition to the adhesive material a non-self-adhesive material such as polyolefins.

4. Use of the multilayer film according to any of the preceding claims for vertical form film seal or horizontal form fill seal applications.

5. Method for producing a bag using a vertical form film seal or horizontal form fill seal process using the multilayer film according to any of claims 1 to 3.

6. A bag made from the multilayer film according to any of claims 1 to 3.

7. The bag according to claim 6 produced by using a vertical form film seal or horizontal form fill seal process.


Patentansprüche

1. Mehrschichtfolie, umfassend eine Außenschicht und eine Haftschicht, wobei die Mehrschichtfolie eine erste Folie umfasst, die die Außenschicht und die Haftschicht umfasst, wobei die erste Folie nicht orientiert ist, und eine zweite Folie, wobei die zweite Folie orientiert ist und die zweite Folie auf die Außenschicht der ersten Folie laminiert ist, und ein Anteil von 5 bis 99 Gew.-% der gesamten Mehrschichtfolie orientiert ist, wobei die Außenschicht ein Ethylen-Alpha-Olefin-Copolymer umfasst und die Haftschicht ein Ethylen-Vinylacetat-Copolymer umfasst, wobei der Gewichtsanteil an Vinylacetat mindestens 20 % beträgt.

2. Mehrschichtfolie nach Anspruch 1, wobei die Haftschicht Ethylen-Vinylacetat-Copolymer umfasst, wobei das Gewichtsverhältnis von Vinylacetat mindestens 25 %, vorzugsweise mindestens 35 %, noch bevorzugter mindestens 40 % beträgt.

3. Mehrschichtfolie nach einem der vorstehenden Ansprüche, wobei die Haftschicht zusätzlich zum Haftmaterial ein nicht selbsthaftendes Material wie Polyolefine umfasst.

4. Verwendung der Mehrschichtfolie nach einem der vorstehenden Ansprüche für vertikale Form-Füll-Siegel- oder horizontale Form-Füll-Siegel-Anwendungen.

5. Verfahren zur Herstellung eines Beutels unter Verwendung eines vertikalen Form-Folie-Siegel- oder horizontalen Form-Füll-Siegel-Verfahrens unter Verwendung der Mehrschichtfolie gemäß einem der Ansprüche 1 bis 3.

6. Beutel aus der Mehrschichtfolie gemäß einem der Ansprüche 1 bis 3.

7. Beutel gemäß Anspruch 6, hergestellt unter Verwendung eines vertikalen Form-Folie-Siegel- oder horizontalen Form-Füll-Siegel-Verfahrens.


Revendications

1. Film multicouche comprenant une couche externe et une couche adhésive, dans lequel le film multicouche comprend un premier film comprenant la couche externe et la couche adhésive, dans lequel le premier film est non orienté, et un deuxième film, dans lequel le deuxième film est orienté et le deuxième film est laminé sur la couche externe du premier film, et une partie comprise entre 5 et 99 % en masse du film multicouche total est orientée, dans lequel la couche externe comprend un copolymère d'éthylène et d'alpha-oléfine, et la couche adhésive comprend un copolymère d'éthylène et d'acétate de vinyle dans lequel le rapport pondéral d'acétate de vinyle est d'au moins 20 %.

2. Le film multicouche selon la revendication 1, dans lequel la couche adhésive comprend un copolymère d'éthylène-acétate de vinyle dans lequel le rapport pondéral de l'acétate de vinyle est d'au moins 25 %, de préférence d'au moins 35 %, et plus préférablement d'au moins 40 %.

3. Film multicouche selon l'une quelconque des revendications précédentes, dans lequel la couche adhésive comprend, en plus du matériau adhésif, un matériau non auto-adhésif tel que des polyoléfines.

4. Utilisation du film multicouche selon l'une quelconque des revendications précédentes pour des applications de scellage vertical ou de scellage horizontal.

5. Procédé de fabrication d'un sac à l'aide d'un procédé de scellage vertical ou horizontal utilisant le film multicouche selon l'une quelconque des revendications 1 à 3.

6. Sac fabriqué à partir du film multicouche selon l'une quelconque des revendications 1 à 3.

7. Sac selon la revendication 6 fabriqué à l'aide d'un procédé de scellage vertical ou horizontal.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2011311413 B2
- US 2006286323 A1
- US 2008152850 A1
- WO 2019121119 A1
- US 2020324528 A1